(19) Europäisches Patentamt / European Patent Office / Office européen des brevets

(11) **EP 2 763 548 B1**

(12) **EUROPEAN PATENT SPECIFICATION**

(45) Date of publication and mention
of the grant of the patent:
**20.04.2016 Bulletin 2016/16**

(21) Application number: **12769415.6**

(22) Date of filing: **03.10.2012**

(51) Int Cl.:
*A23K 10/26* [(2016.01)]     *A23K 20/00* [(2016.01)]
*A23K 20/189* [(2016.01)]     *A23K 40/20* [(2016.01)]
*A23K 50/40* [(2016.01)]

(86) International application number:
**PCT/EP2012/069516**

(87) International publication number:
**WO 2013/050407 (11.04.2013 Gazette 2013/15)**

(54) **MEAT TISSUE DIGESTS HAVING ENHANCED PALATABILITY FOR USE IN PET FOOD**

FLEISCHGEWEBEEXTRAKTE MIT VERBESSERTEM WOHLGESCHMACK ZUR VERWENDUNG IN TIERNAHRUNG

HYDROLYSATS À BASE DE TISSU CARNÉ PRÉSENTANT UNE MEILLEURE APPÉTIBILITÉ UTILISÉS DANS DES ALIMENTS POUR ANIMAUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.10.2011 EP 11306275**
**03.10.2011 US 201161542429 P**
**02.02.2012 EP 12153643**
**02.02.2012 US 201261594134 P**
**13.03.2012 US 201261610181 P**

(43) Date of publication of application:
**13.08.2014 Bulletin 2014/33**

(73) Proprietor: **Spécialités Pet Food**
**56250 Elven (FR)**

(72) Inventor: **DE RATULD, Aurélie**
**F-56880 Ploeren (FR)**

(74) Representative: **Regimbeau**
**20, rue de Chazelles**
**75847 Paris Cedex 17 (FR)**

(56) References cited:
**WO-A1-94/25580**     **CA-A1- 1 160 500**
**US-B1- 7 070 953**

• **Xia Li ET AL: "Pseudogenization of a Sweet-Receptor Gene Accounts for Cats' Indifference toward Sugar", BMC NEUROSCIENCE, vol. 5, no. 1, 1 January 2005 (2005-01-01) , page 25, XP55213674, GB ISSN: 1471-2202, DOI: 1471-2202(2004)005[0025:BEABCO]2.0.CO;2**
• **John W S Bradshaw: "The Evolutionary Basis for the Feeding Behavior of Domestic Dogs (Canis familiaris) and Cats (Felis catus) 1-3", JOURNAL OF NUTRITION, 1 January 2006 (2006-01-01), pages 1927S-1931S, XP55213666, Retrieved from the Internet: URL:http://jn.nutrition.org/content/136/7/ 1927S.full.pdf [retrieved on 2015-09-16]**

Remarks:
The file contains technical information submitted after the application was filed and not included in this specification

**Description**

FIELD OF THE INVENTION

The present invention relates to the field of cat food. More specifically, the present invention is related to palatability-enhancing meat tissue digests from animal including fish for use in cat food.

BACKGROUND OF THE INVENTION

Protein hydrolysates are standard components of pet food, to which they typically confer palatability.
Protein hydrolysis can generally be achieved by physical (heat and shear) or chemical (acid or enzymes) means. However, enzymatic hydrolysis is the most widespread method for hydrolyzing proteins in the food industry, in particular because enzymes enable to obtain hydrolysates (or digests) of interest for nutritional and/or organoleptic purposes.
Proteolytic enzymes are proteases or peptidases which can be identified:

- on the basis of the key amino acid involved in the active site mechanisms of the enzyme: serine; carboxyl; sulfhydryl; or metallo, and/or

- by the relative pH range in which they are active: acid; neutral; or alkaline; and/or

- based on their hydrolytic abilities: an endoprotease or endopeptidase cuts between amino acids on the interior of a protein or a peptide, whereas an exoprotease or exopeptidase cleaves off amino acids at the ends of a protein or a peptide.

As examples of common endoproteases, one can cite: chymosin which is a highly specific endoprotease; pepsin having relatively broad specificity but cleaving preferably bonds involving Phe, Met, Leu, and Tryp residues; neutral proteases such as trypsin which is a highly specific endoprotease that cleaves bonds between Arg or Lys residues and the subsequent amino acid; papain and bromelain that are non-specific sulfhydryl endopeptidases; alkaline proteases such as subtilisin which is quite non-specific; and the like.
In food industry, it is well-known that protein hydrolysis affects biological, physical, and chemical properties, as well as food processing, and that this may be advantageous or not. On the one hand, hydrolysis generally improves solubility, as well as heat and pH resistance due to low molecular weight distribution. On the other hand, it typically increases osmolarity and reduces chemical stability. Moreover, depending on the enzymes, the protein sources and/or the reaction conditions, palatability may be reduced owing to, e.g., production of bitter peptides. It is thus essential to adequately determine the enzymes, protein sources and reaction conditions (e.g., enzyme concentration and reaction time) to achieve a specific technical effect of the resulting digests.
Pet food manufacturers often use liver or viscera or meat tissue of poultry and other animals as protein sources in pet food production. Among viscera, some (e.g., gut) are advantageously rich in proteolytic enzymes so that they require very little, if any, additional protease for hydrolyzing proteins. When using animal organs as protein sources, it is also possible to take advantage of endogenous proteolytic enzymes. However, among these enzymes, exoproteases are often too highly represented to produce an appropriate digest. Thus, the meat source is usually ground and treated with appropriately selected enzymes to provide a high yield of flavoring peptides. In addition, because flavor preferences differ from one pet species to another, pet food manufacturers need to select enzymes, protein sources, and hydrolysis conditions, that enable to obtain high yields of digests having the desirable palatability properties. Further to optimizing palatability, the chosen proteases should be adapted to "friendly" processing conditions such as moderate enzyme concentrations as well as temperature ranges that help to limit manufacturing costs and to prevent bacterial growth, respectively.
In pet food industry, palatability enhancers (PEs) are extremely useful, if not necessary, for animal consumption. Many pets, and cats in particular, may even refuse to eat extruded pet food that has not been treated with PEs. Pet foods typically contain flavor compositions to increase the palatability thereof and to make them appealing to pets.
PEs are liquid or dry compositions, that can be used alone or in combination. Some PEs are applied to the outer surface of the pet food (coating) whereas other PEs are incorporated into the pet food material (inclusion).
Flavoring protein hydrolysates are widely used as PEs. For instance, International patent application published under No. WO2011/043828 discloses methods for enhancing the palatability of animal digests useful as PEs. These methods comprise adding anti-gelling agents to animal digests while adjusting the pH to a value optimal for proteases used to hydrolyze viscera proteins. Also, International patent application published under No. WO2009/095417 describes methods for enhancing the palatability of pet foods by using a PE prepared by sequential steps of hydrolysis with proteases and lipases.

There is however a continuing effort to develop processing and formulations which improve the palatability of cat food while maintaining its nutritional value.

## SUMMARY OF THE INVENTION

The present invention concerns a method for preparing a meat tissue digest having enhanced palatability, comprising:

a) providing a meat tissue from animal;

b) contacting said meat tissue with at least one alkaline endopeptidase in an appropriate amount;

c) allowing said alkaline endopeptidase to hydrolyze said meat tissue for a suitable period of time;

d) thermally treating the thus obtained digest product to inactivate said alkaline endopeptidase; and

e) obtaining said meat tissue digest having an appropriate degree of hydrolysis and exhibiting enhanced palatability, as claimed.

## BRIEF DESCRIPTION OF THE FIGURES

The present invention is illustrated by reference to the following accompanying figures:

- Figure 1: Flowchart representing various embodiments of the method according to the present invention. Essential steps a), b), c), d), and e) are represented in continuous line; optional steps a1), c1), d1), d2), d3), d4), d5), and d6) are represented in dotted line.
- Figure 2: Graphic representations of the degree of hydrolysis (DH) as a function of the alkaline endopeptidase amount (E) and of the time of the hydrolysis reaction (T). Equation (1):

$$DH=14.04+1.8xE+5.5xT-0.48xT^2+4.97xE^2+0.829xExT$$

## DETAILED DESCRIPTION OF THE INVENTION

### DEFINITIONS

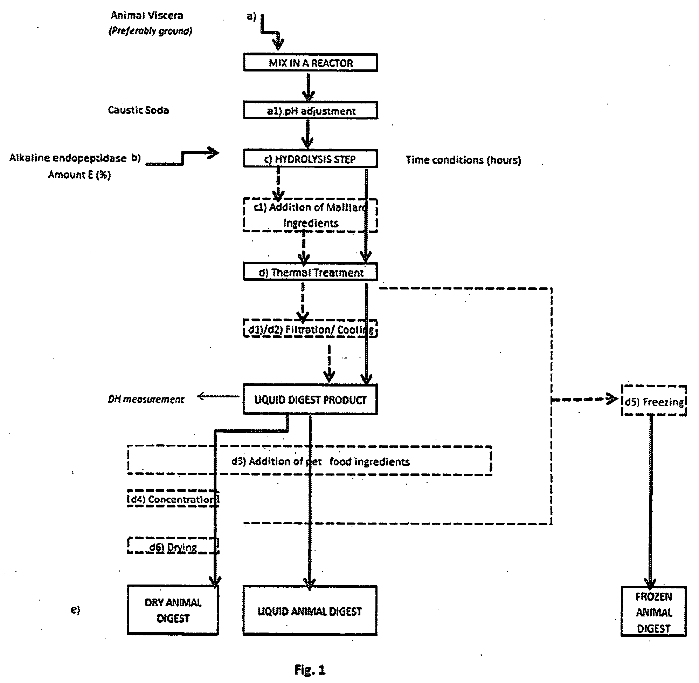

Unless specifically stated otherwise, percentages are expressed herein by weight of a liquid digest product obtained after the thermal treatment step d) of the method of the present invention. This liquid digest product results from said step d). Alternatively, if step d) is followed by a filtrating step d1), then percentages will be expressed by weight of a liquid digest product obtained from said step d1). Yet alternatively, if said step d) or d1) is followed by a cooling down step d2), then percentages will be expressed by weight of a liquid digest product obtained from said step d2) (see Fig. 1).

In the present disclosure, ranges are stated in shorthand, so as to avoid having to set out at length and describe each and every value within the range. Any appropriate value within the range can be selected, where appropriate, as the upper value, lower value, or the terminus of the range. For example, a range of 0.1-1.0 represents the terminal values of 0.1 and 1.0, as well as the intermediate values of 0.2, 0.3, 0.4, 0.5, 0.6, 0.7, 0.8, 0.9, and all intermediate ranges encompassed within 0.1-1.0, such as 0.2-0.5, 0.2-0.8, 0.7-1.0, etc.

As used throughout, the singular form of a word includes the plural, and vice versa, unless the context clearly dictates otherwise. Thus, the references "a", "an", and "the" are generally inclusive of the plurals of the respective terms. For example, reference to "a method" or "a food" includes a plurality of such "methods" or "foods". Similarly, the words "comprise", "comprises", and "comprising" are to be interpreted inclusively. Likewise the terms "include", "including" and "or" should all be construed to be inclusive. All these terms however have to be considered as encompassing exclusive embodiments that may also be referred to using words such as "consist of".

The methods and compositions and other embodiments exemplified here are not limited to the particular methodologies, protocols, and reagents that are described herein because, as the skilled artisan will appreciate, they may vary.

Unless defined otherwise, all technical and scientific terms, terms of art, and acronyms used herein have the meanings commonly understood by the skilled artisan in the field(s) of the invention, or in the field(s) where the term is used. Although any compositions, methods, articles of manufacture, or other means or materials similar or equivalent to those described herein can be used in the practice of the present invention, the preferred compositions, methods, articles of manufacture, or other means or materials are described herein.

The term "about" as used herein when referring to a measurable value such as an amount, a temporal duration, and the like, is meant to encompass variations of $\pm 10\%$, more preferably $\pm 5\%$, even more preferably $\pm 3\%$ from the specified value, as such variations are appropriate to reproduce the disclosed methods and products.

The term "palatability" means a relative preference of an animal for one food composition to another. Palatability refers to the overall willingness of an animal to eat a certain food. Advantageously but not necessarily, palatability further refers to the capacity of the eaten food to satisfy the animal. Whenever an animal shows a preference, for example, for one of two or more foods, the preferred food is more "palatable", and has "enhanced palatability". The relative palatability of one food compared to one or more other foods can be determined, for example, in side-by-side, free-choice comparisons, e.g., by relative consumption of the foods, or other appropriate measures of preference indicative of palatability. It can advantageously be determined by a standard testing protocol in which the animal has equal access to both compositions such as a test called "two-bowl test" or "versus test" (see below). Such preference can arise from any of the animal's senses, but typically is related to, *inter alia,* taste, aroma, flavour, texture, smell and/or mouth feel.

A pet food stated herein to have "enhanced palatability" is one for which a pet exhibits preference relative to a control composition. Advantageously, a pet food having enhanced palatability is appealing or pleasing not just to pets, but to pet owners as well.

The terms "palatability enhancers" (PEs), "palatants", "flavours", "palatability agents", "appetizing factors", "flavour compositions", "palatability-enhancing compositions", "flavour enhancers", and any other similar terms mean any material that enhances the palatability of a food composition to an animal. A PE may be a single material or a blend of materials, and it may be natural, processed or unprocessed, synthetic, or part of natural and part of synthetic materials. Typically, a PE for animal food is an edible composition that provides an aroma, taste, aftertaste, smell, mouth feel, texture, and/or organoleptic sensation that is appealing or pleasing to the target animal.

For example, a PE may contribute to initial food appeal by its smell and/or to continued consumption by its smell but also by its taste and/or its aftertaste, and/or its mouthfeel, and/or its texture. "Initial appeal" is an aspect of palatability that induces an animal to initially taste or try a food, and that can be measured by the criteria "first choice" or "first food consumed". "Continued consumption" is an aspect of palatability that induces an animal to continue consuming a food that has been initially only tasted or tried.

The present invention concerns cats.

The term "food" as used herein means a product or composition that is intended for ingestion by an animal and provides at least one nutrient to the animal. The term "food" includes any food, feed, snack, food supplement, treat, toy (chewable and/or consumable toys), meal substitute, or meal replacement. "Food" encompasses such products in any form, solids, liquids, gels, or mixtures or combinations thereof. Thus, beverages of any type are clearly encompassed within the term "food."

The term "pet food" means a composition intended for consumption by a pet.

There are three main categories or classes of pet foods depending on their moisture content, which is either low or medium or high:

- dry or low moisture-containing products (having less than about 15% moisture): they usually produce a crunching sound when chewed by a pet; they are generally highly nutritious, may be inexpensively packaged (e.g., in bags or boxes), and are highly convenient to store and use; however, they are typically the least palatable;

- canned or wet or high moisture-containing products (having more than about 50% moisture): typically high meat-containing products, they are generally considered as the most palatable to pets; they are usually costly to produce and package (mainly in cans);

- semi-moist or semi-dry or soft dry or soft moist or intermediate or medium moisture-containing products (having from about 15 to about 50% moisture): usually packaged in appropriate bags or boxes, they are commonly less palatable than canned foods but more palatable than dry foods.

Nutritionally-balanced pet foods are widely known and used in the art.

A "nutritionally-complete", "nutritionally-balanced" or "complete and nutritionally-balanced food" is one that contains all known required nutrients for the intended recipient or consumer of the food, in appropriate amounts and proportions based, for example, on recommendations of recognized or competent authorities in the field of companion animal nutrition. Such foods are therefore capable of serving as a sole source of dietary intake to maintain life or promote production, without the addition of supplemental nutritional sources.

The term "kibble" used herein refers to particulate chunks or pieces formed by either a pelleting or extrusion process. Typically, kibbles are produced to give dry and semi-moist pet food. The pieces can vary in sizes and shapes, depending on the process or the equipment. For instance, kibbles can have spherical, cylindrical, oval, or similar shapes. They can have a largest dimension of less than about 2 cm for example.

The term "chunk-in-"X" products" mean herein all edible foodstuffs comprising chunks in a preparation (said preparation being "the X preparation"). Classical examples thereof are chunk-in-jelly products, chunk-in-gravy products, and the like. This category of "chunk-in-X" products encompasses also edible forms other than chunks that may be contained in the X preparation such as a jelly, a gravy, and the like. For instance, other forms than chunks may be sliced products, grated products, etc.

The term "loaf" used herein refers to edible foodstuffs obtained as moist products, and includes terrines, pates, mousses, and the like.

The term "food supplement" or "dietary, supplement" or "supplement" means a product that is intended to be ingested in addition to the normal animal diet. Dietary supplements may be in any form, e.g., solid, liquid, gel, tablets, capsules, powder, and the like. Preferably they are provided in convenient dosage forms. In some embodiments, they are provided in bulk consumer packages such as bulk powders, liquids, gels, or oils. In other embodiments, supplements are provided in bulk quantities to be included in other food items such as snacks, treats, supplement bars, beverages, and the like. Palatability-enhancing compositions can be used to improve palatability of dietary supplements in the same manner as they are used to improve palatability of nutritionally-balanced foods.

The term "treat" (or "biscuit") means any food item that is designed to be fed to a pet, preferably at non-meal time, by the owner to help, promote or sustain a bonding process between a pet and its owner. Examples of treats for dogs are bones. Treats may be nutritional or not. Treats often contain palatability enhancers in a manner comparable to nutritionally-balanced foods. *

"Toys" include, for example chewable toys. Examples of toys for dogs are artificial bones. Toys further include partially consumable toys (e.g., comprising plastic components) or fully consumable toys (e.g., rawhides).

The term "animal digest" means herein material which results from chemical and/or enzymatic hydrolysis of clean, undecomposed animal tissue. In some embodiments, an animal digest as used herein is fully consistent with the definition promulgated by the Association Of American Feed Control Officials, Inc. (AAFCO). Animal digest is preferably derived from animal tissues including fish tissues, but excluding hair, horns, teeth, hooves, and feathers. The skilled artisan will appreciate that while such tissues are not preferred, trace amounts might be found unavoidably even under good manufacturing practices. Also not included are visceral contents or foreign or fecal matter, although trace contaminant amounts are sometimes present. An animal digest may be dried or not. Typical examples of animal digests are digests from poultry, pork, beef, sheep, lamb, fish, etc.

As used herein, the term "poultry" encompasses any species or kind of bird, preferably chicken, turkey, duck, goose, and the like.

As used herein, the term "fish" encompasses any organisms from marine or fresh water, in particular any species or kind of fish (carnivorous, omnivorous or herbivorous fish), or crustaceans or molluscs. Preferably, the term "fish" herein refers to white fish such as cod, hake, sardine, and the like; as well as other fish such as tuna and salmon; and crustaceans or molluscs such as shrimp, squid, lobster, crayfish, crab, clam, oyster, mussel, and the like.

In the context of the present invention, animal digests are obtained by enzymatically hydrolysing meat tissues from animal, including fish. In the expression "animal tissues", the term "animal" does not encompass human and pets, but preferably livestock and fish.

By "meat tissue" (or "meat"), it is meant muscle tissue, connective tissue, carcass, bones, skin, and the like. By way of example, "meat" includes intact or preferably ground beef, pork, lamb, mutton, horsemeat, goat meat, meat, skin of poultry (domestic fowl such as chicken, duck, goose or turkey) and more specifically flesh tissues from any fowl (any bird species), animal flesh trim and animal tissues derived from processing such as frozen residue from chicken, beef, pork etc., chicken skin, pork skin, low temperature rendered animal tissues such as low temperature rendered beef and low temperature rendered pork, mechanically separated meat or mechanically deboned meat (MDM) (meat flesh removed from bone by various mechanical means using commercially available equipment) such as mechanically separated beef, mechanically separated pork, mechanically separated chicken, mechanically separated turkey, mechanically separated fish, any cooked animal flesh derived from any animal species (including fish).

It is also envisioned that a variety of meats may be utilized in the invention depending upon the product's intended use. For instance, a combination of MDM and whole meat muscle may be utilized, as well as a combination of animal tissues such as avian, porcine, bovine, ovine, and/or fish tissues.

"Meat" includes non-rendered, non-dried, raw meat, raw meat products, as well as fresh, refrigerated, or frozen meat.

As indicated above, "meat tissues" from animal encompass fish tissues. These include fish flesh, fish skin, fish bones, fish heads, fish edges, any parts thereof, as well as mixtures thereof.

Residual fat adhering to the "meat tissues" as defined above may be present as a non-essential part of the starting meat tissue material.

As used herein, a "pet food ingredient" is any compound, composition or material that is suitable for pet consumption. Non-limiting examples of pet food ingredients are PEs, animal digests (e.g., meat tissue digests), nitrogen compounds (e.g., proteins, peptides, and amino acids), grains, carbohydrates, fats or lipids, nutrients, preservatives including anti-oxidants, surfactants, texturing or texturizing or stabilizing agents, colouring agents, inorganic phosphate compounds, prebiotics, probiotics, etc.

As used herein, a "palatability-enhancing composition ingredient" is any compound, composition or material that is suitable for pet consumption. Non-limiting examples of palatability-enhancing composition ingredients are animal digests (e.g., meat tissue digests), nitrogen compounds (e.g., proteins, peptides, and amino acids), carbohydrates, fats or lipids, nutrients, preservatives including anti-oxidants, surfactants, texturing or texturizing or stabilizing agents, inorganic phosphate compounds, prebiotics, probiotics, etc. Ingredients may be comprised as such in the palatability-enhancing composition, or they can be contacted into the composition and react *in situ* for producing transformed materials that are also encompassed by the term "palatability-enhancing composition ingredient". Examples of ingredients that react together in the composition are, without limitation, nitrogen compounds and carbohydrates, so as to obtain transformed materials such as Maillard reaction-resulting products, and the like.

The term "endopeptidase" or "endoprotease" means any proteolytic enzyme that catalyzes the cleavage of internal bonds in a peptide or a protein.

The term "alkaline endopeptidase" or "alkaline endoprotease" means any endopeptidase or endoprotease having an optimal hydrolyzing activity at a pH equal to or greater than about 7.0. Such an enzyme is preferably active at a pH from about 7.0 to about 10.0.

"Proteins" or "polypeptides" include all conventional protein sources that are compatible for animal consumption, especially plant or vegetable proteins, animal proteins, and microbial proteins (e.g., yeast).

Examples of animal proteins are casein, albumin, animal digests (e.g., meat tissue digests), poultry meal, meat meal, bone meal, fish meal, and the like.

Examples of vegetable proteins are corn gluten, soy protein, soy flour, hydrolyzed vegetable protein (HVP), and the like.

The term "yeast" herein refers to any yeast, preferably inactive, as well as to yeast by-products that are compatible with compositions for animal consumption. Yeasts are well known in the art as being protein-rich. Yeasts include, without limitation, brewer's yeast, baker's yeast, torula yeast, molasses yeast, and the like. Yeast by-products include, without limitation, yeast extracts, yeast hydrolysates, yeast autolysates, etc.

The term "amino acid" means a molecule containing both an amino group and a carboxyl group. In some embodiments, the amino acids are $\alpha$-, $\beta$-, $\gamma$- or $\delta$-amino acids, including their stereoisomers and racemates.

As used herein, the terms "nitrogen compound" encompass the twenty known natural amino acids, as well as amino acid sequences, i.e., peptides, oligopeptides, and proteins or polypeptides. Also are included all compounds containing nitrogen from any sources that are acceptable for use in pet foods. Appropriate nitrogen compounds can be chosen from any nitrogen compounds containing sulfur that are acceptable for use in pet foods, such as sulfur-containing amino acids (e.g., methionine, cystine, cysteine), glutathione; other amino acids such as glycine, alanine, glutamic acid, and the like; as well as other compounds such as HVPs, yeast autolysates, yeast extracts, yeast hydrolysates; and combinations thereof.

Examples of grains are corn, milo, alfalfa, wheat, barley, rice, soy, and the like.

Examples of carbohydrates include dextrose, fructose, sucrose, polysaccharides, fibers, starches, and the like. Preferably, carbohydrates are or contain reducing sugars.

Preferably, "reducing sugars" are chosen from hexoses, pentoses, glucose, fructose, xylose, ribose, arabinose, starch hydrolysates, and the like, as well as combinations thereof.

Examples of fats include tallow, oils, from any origin such as animal, plant (including vegetable), or marine oils. Plant oils which are available in large quantities are typically canola oil, soybean oil, corn oil, olive oil, sunflower oil, linseed oil, palm oil, safflower oil, and the like, as well as by-products thereof. Typical animal fats are tallow, lard, poultry fat, and the like, as well as by-products thereof. Marine oils are typically tuna oil, sardine oil, salmon oil, anchovy oil, fish oil, and the like, as well as by-products thereof. Also are encompassed herein the fats that are derived from animal, plant, marine sources, or that are produced by animals and plants.

Examples of nutrients include, without limitation, vitamins, minerals and electrolytes, such as vitamins A, C, E, B12, D3, folic acid, D-biotin, cyanocobalamin, niacinamide, thiamine, riboflavin, pyridoxine, menadione, beta-carotene, calcium pantothenate, choline, inositol, calcium, potassium, sodium, zinc, iron, manganese, copper, iodine, and the like.

"Preservatives" are in particular used for ensuring a long shelf life of a food product or a food composition. Preservatives comprise natural or synthetic anti-oxidants (such as BHA, BHT, propyl gallate, octyl gallate, tocopherols, rosemary extracts, and the like); as well as sorbic acid or sorbic salts (e.g., potassium sorbate), and other acids like phosphoric acid and the like. "Surfactants" are molecules that are surface active. They typically have a hydrophilic portion (e.g., one or more head groups) and a hydrophobic (or lipophilic) portion (e.g., one or more tails). They are classified in various ways, for example according to their hydrophilic-lipophilic balance (HLB). They can also or alternatively be classified as non-ionic, ionic or zwitterionic compounds based on the presence or absence of formally-charged in the head group(s). Surfactants are well-known in the art. One can cite, for example, Tween® surfactants. Surfactants include, without limitation, emulsifiers and wetting agents. In some instances, the terms "surfactants" and "emulsifiers" can be used interchangeably.

The term "inorganic phosphate compound" as used herein means a chemical compound comprising at least one phosphorus atom. This chemical compound may be natural or synthetic, ionized or not.

"Inorganic pyrophosphates" or "pyrophosphates" include alkali metal pyrophosphates, encompassing monoalkali metal pyrophosphates and polyalkali metal pyrophosphates.

The formula $M_xH_yP_nO_{3n-1}$ when n=2 is the general formula for alkali metal pyrophosphates. When M is a univalent metal, then x+y=n+2. When M is a divalent metal, then x+y=n. Univalent metal pyrophosphates and divalent metal pyrophosphates can be used herein.

Examples of monoalkali metal pyrophosphates include sodium trihydrogen pyrophosphate, potassium trihydrogen pyrophosphate, calcium hydrogen pyrophosphate, barium hydrogen pyrophosphate, magnesium hydrogen pyrophosphate.

Polyalkali metal pyrophosphates encompass dialkali metal pyrophosphates, trialkali metal pyrophosphates, tetralkali metal pyrophosphates, etc.

Examples of dialkali metal pyrophosphates are disodium dihydrogen pyrophosphate, dipotassium dihydrogen pyrophosphate, dicalcium pyrophosphate, dibarium pyrophosphate, dimagnesium pyrophosphate, dimanganese pyrophosphate, dizinc pyrophosphate.

Trialkali metal pyrophosphates are, for example, trisodium hydrogen pyrophosphate, tripotassium hydrogen pyrophosphate.

Pyrophosphates may be anhydrous or hydrated.

"Polyphosphates" have the formula $M_xH_yP_nO_{3n+1}$ where n is 3, 4,5,...

Examples of polyphosphates are tripolyphosphates, pentapolyphosphates, and hexapolyphosphates.

Tripolyphosphates include sodium tripolyphosphate, potassium tripolyphosphate, calcium tripolyphosphate, and magnesium tripolyphosphate.

Hexapolyphosphates include sodium hexapolyphosphate, potassium hexapolyphosphate, calcium hexapolyphosphate, and magnesium hexapolyphosphate.

Examples of monophosphates include monosodium monophosphate, disodium monophosphate, trisodium monophosphate, monopotassium monophosphate, dipotassium monophosphate, tripotassium monophosphate, adenosine monophosphate (AMP), guanosine monophosphate (GMP), inosine monophosphate (IMP), uridine monophosphate (UMP), cytidine monophosphate (CMP).

A "texturing agent" or "texturizing agent" or "stabilizing agent" is an ingredient that affects the texture or the mouthfeel of an edible product, e.g., a component that increases the viscosity of an edible product.

A "colouring agent" means herein any substance of natural origin or any synthetic colour that is suitable (preferably certified) for use in pet food. Colouring agents are useful to, *inter alia,* compensate for colour changes during processing or to give an appetizing colour to an edible product.

"Probiotics" are live microorganisms that have, upon ingestion, a beneficial effect on a host animal by improving its intestinal microbial balance. Thereby, probiotics beneficially affect the host animal by maintaining its health and/or safety and/or well-being; and/or by preventing and/or treating specific medical conditions. The probiotics are given to facilitate a process whereby the endogenous anaerobic flora limits the concentration of potentially harmful (mostly aerobic) bacteria in the digestive tract. Examples of appropriate probiotics for use in pet food are, without limitation, lactic acid bacteria such as *Lactobacillus* spp., *Lactococcus* spp., *Streptococcus* spp.; as well as other types of bacteria.

"Prebiotics" are non-digestible food ingredients that beneficially affect an host animal by selectively stimulating the growth and/or the activity of microorganisms in the digestive tract, thereby favouring maintenance and/or improvement of the host animal's health and/or safety and/or well-being. Examples of prebiotics include fructooligosaccharides (FOS), xylooligosaccharides (XOS), galactooligosaccharides (GOS), and manooligosaccharides.

A "thermal reaction" is, according to the present invention, a reaction obtained by combining at an elevated temperature, at least one carbohydrate, preferably a reducing sugar, and at least one nitrogen compound. Such a reaction may actually include various concomitant and/or successive reactions, including, e.g., Maillard reaction(s).

The terms "thermal treatment" as referred to in step d) of the method of the present invention encompass heat treatments to inactivate enzymes, that can advantageously be performed concomitantly with, thermal reactions as defined above.

It is thus meant herein by the term "Maillard ingredient(s)", one or more carbohydrates, preferably reducing sugars; and/or one or more nitrogen compounds. Indeed, Maillard ingredients are ingredients used to achieve one or more thermal reactions as defined above.

As used herein, the term "carrier" means "carrier for concentrating" or "carrier for drying", and encompasses conventional compounds that are well-known in the art. Examples thereof are microbial proteins (e.g., yeasts), animal proteins, vegetable proteins, carbohydrates (e.g., maltodextrin, cyclodextrin), as well as minerals or inorganic compounds, including inorganic phosphate compounds as defined above.

Since it is difficult, or even impossible, to determine the exact composition of protein hydrolysates, manufacturers rather commonly use undirect parameters such as the degree of hydrolysis (DH) of peptide bonds of proteins. DH is represented by the: (i) ratio of amino nitrogen over total nitrogen (AN/AT Ratio) in the resulting hydrolysate; (ii) presence of amines in the hydrolysate; and (iii) osmolarity of the hydrolysate. Many conventional methods can be used to determine the DH. Methods used in the food industry, and more specifically in the pet food industry, for quantifying the DH are typically based on one of the following principles: (1) determination of soluble nitrogen in the presence of a precipitating agent such as trichloroacetic acid (TCA); or (2) determination of free alpha amino groups by colorometric methods (e.g., titration with trinitrobenzenesulfonic acid, TNBS), or pH titration of the released protons. TCA-soluble nitrogen may be determined by the Kjeldhal assay (A.O.A.C. 1995) or the Biuret reaction (Hung et al. 1984). Such methods are described in detail in Silvestre (1997). Alternatively, DH may advantageously be determined by an OPA (o-phthaldialdehyde)-based method as described below (Nielsen, 2001).

"Coating", as used herein, refers to the topical deposition of the palatability-enhancing composition onto the surface of the basal food composition, such as by spraying, dusting, and the like.

"Inclusion" as used herein, refers to the addition of the palatability-enhancing composition internally to the pet food preparation, by mixing it with other pet food ingredients, before further processing steps for obtaining the final pet food product (including thermal treatment and/or extrusion and/or retorting, etc).

The term "single package" means that the components of a kit are physically associated in or with one or more containers and considered a unit for manufacture, distribution, sale, or use. Containers include, but are not limited to, bags, boxes, cartons, bottles, pouches, packages of any type or design or material, over-wrap, shrink-wrap, stapled or otherwise affixed components, or combinations thereof. A single package may be containers of individual components physically associated such that they are considered a unit for manufacture, distribution, sale, or use.

As used herein, a "means for communicating information or instructions" is a kit component under any form suitable for providing information, instructions, recommendations, and/or warranties, etc. Such a means can comprise a document, digital storage media, optical storage media, audio presentation, visual display containing information. The means of communication can be a displayed web site, brochure, product label, package insert, advertisement, visual display, etc.

## DESCRIPTION OF THE INVENTION

It is shown herein that cat food palatability can be advantageously enhanced upon appropriately selecting conditions for producing meat tissue digests by enzymatically hydrolyzing meat tissues from animal, in particular from fish. These conditions include at least one of the following parameters: enzyme amount, hydrolysis duration, target DH value. All these 3 parameters are appropriately selected for achieving advantageous levels of cat food palatability.

In a first aspect illustrated by Fig. 1, the present invention concerns a method for preparing a meat tissue digest having enhanced palatability to cats, comprising:

a) providing a meat tissue from animal, wherein said meat tissue can include fish flesh, fish skin, fish bones, fish heads, fish edges, any parts thereof, as well as mixtures thereof;

b) contacting said meat tissue with at least one alkaline endopeptidase;

c) allowing said alkaline endopeptidase to hydrolyze said meat tissue;

c1) adding one or more Maillard ingredients to the digest product of said step c);

d) thermally treating the thus obtained digest product to inactivate said alkaline endopeptidase; and

e) obtaining said meat tissue digest having enhanced palatability,

wherein:

-    said alkaline endopeptidase is used in an amount (E) from about 0.01 to about 1.2 % relative to the weight of the digest product obtained after step d);

-    said hydrolysis in step c) is performed during a period of time (T) from about 0.25 to about 5.0 hours; and

- the digest product obtained after step d) has a degree of hydrolysis (DH) above 20 %, said DH being defined by equation (1):

$$DH=14.04+1.8xE+5.5xT-0.48xT^2+4.97xE^2+0.829xExT,$$

wherein said DH is determined using an o-phthaldialdehyde (OPA) - based method..

The method according to the present invention preferably further comprises a step a1) after said step a), of adjusting the pH of the meat tissue (Fig. 1). Said adjusted pH value depends on the alkaline endopeptidase used in the method of the invention. It is chosen in order to favor, or even optimize, the hydrolyzing activity of the enzyme. Preferably, said step a1) is performed so as to adjust the pH to a pH value which is the optimal pH value or pH range according to the enzyme manufacturer's recommendations. That will be readily apparent to those skilled in the art. The pH can be adjusted by any appropriate compound that is acceptable for use in pet food, such as phosphoric acid, caustic soda, other conventional and appropriate acidity or basicity regulators, and combinations thereof.

Said step c) of hydrolysis is preferably performed at a temperature which is the optimal temperature value or temperature range according to the enzyme manufacturer's recommendations. This belongs to the normal skills in the art. Typically, the temperature in step c) is from about 50 to about 80°C, preferably from about 55 to about 75°C, yet preferably from about 60 to about 70°C.

To inactivate the alkaline endopeptidase, said thermal treatment of step d) is preferably performed at a temperature from about 80 to about 110°C, during a period of time from about 5 to about 60 minutes. Yet preferably, said temperature is from about 90 to about 100°C, and/or said a period of time is from about 15 to about 45 minutes.

Said step d) of heat inactivation of the enzyme is advantageously adapted to facilitate one or more thermal reactions in the digest product. Under these circumstances, it is an essential embodiment of the method of the present invention to further perform a step c1) of adding one or more Maillard ingredients to the digest product of said step c). For example, carbohydrate(s) and/or nitrogen compound(s) is(are) added at a concentration of about 0.01 to 30%, preferably 0.1 to 20%, more preferably 0.1 to 15% for the former, and from about 0.01 to 30%, preferably 0.01 to 20%, more preferably 0.01 to 15% for the latter.

When said step d) is both to inactivate the enzyme and to allow thermal reaction(s) to occur, an appropriate temperature is chosen in the range of about 70 to about 130°C, preferably of about 75 to about 125°C, yet preferably of about 80 to about 120°C. This thermal treatment is performed during a time sufficient for further developing flavour of the digest product, e.g., during a period of time from about 15 minutes to about 20 hours, preferably from about 20 minutes to about 10 hours, yet preferably 30 minutes to about 6 hours.

Preferably, the method according to the present invention further comprises a step d1) after said step d), of filtrating the resulting digest product (Fig. 1). Filtration can be performed using a conventional filter device (such commercial rotary filters). Advantageously, said filtration is performed under appropriate conditions in order to remove from the digest product, particles having a diameter equal to or greater than about 500μm, preferably greater than about 400μm.

Preferably, the method according to the present invention further comprises a step d2) of cooling down the digest product resulting from step d) if no step d1) is performed or if steps d1) and d2) are performed concomitantly (Fig. 1). Alternatively, if step d1) is performed after step d) and as a separate step, then step d2) consists of cooling down the digest product resulting from said step d1). According to an embodiment, cooling down is performed to reach a temperature less than or equal to about 100°C (preferably, from about 80 to about 99°C) for a dry digest product. According to another embodiment, cooling down is performed to reach a temperature less than or equal to about 45°C (preferably, from 25 to 40°C) for a liquid digest product.

According to the definition of the term "percentage" given above, the enzyme amount E will be expressed relative to the weight of the digest product obtained from step d), and the DH will be measured on this digest product if steps d1) and d2) are not performed. Alternatively, if both steps d1) and d2) are performed, the E value will be expressed relative to the weight of the digest product obtained at the end of step d2) (that can be concomitant with step d1)), and the DH will be measured on this digest product. Yet alternatively, if only one step d1) or d2) is performed, the E amount will be expressed relative to the weight of the digest product obtained at the end of said performed step d1) or d2), and the DH will be measured on this digest product.

Preferably, the method according to the present invention further comprises a step d3) consisting of adding one or more pet food ingredients as defined above to the digest product resulting from:

- step d) if steps d1) and d2) are not performed after step d); or

- step d1) if only this step is performed after step d); or

- step d2) in the other cases (step d2) being possibly performed concomitantly with step d1)) (Fig. 1).

In one embodiment, the method of the present invention further comprises a step d4) of concentrating the digest product resulting from:

- step d) if steps d1), d2) and d3) are not performed after step d); or

- step d1) if only this step is performed after step d); or

- step d2) if only this step is performed after step d) or if only both steps d1) and d2) are performed after step d) (step d2) being possibly concomitant with step d1)); or

- step d3) in the other cases (Fig. 1).

The concentration step d4) can be performed using conventional means. For example, one may use commercial devices (e.g., concentrators). Alternatively, one may add to the digest product, one or more carriers as defined above in appropriate proportions. Concentration is advantageously performed so as to achieve a dry matter content from about 5 to about 80%, preferably from about 10 to about 70%, yet preferably from about 20 to about 60%, by weight of the concentrated digest product.

When either step d) or d1) or d2) or d3) or d4) is followed by step e), then the method advantageously comprises a step d5) prior to said step e), said step d5) consisting of freezing the digest product resulting from the latter step of steps d), d1), d2), d3), and d4) (Fig. 1). Freezing is typically performed as rapidly as possible to reach a core temperature of about -20°C. Conventional freezing devices can be used, such as plate deep-freezers.

In one embodiment, the method of the present invention further comprises a step d6) of drying the digest product resulting from:

- step d) if steps d1), d2), d3), and d4) are not performed after step d); or

- step d1) if only this step is performed after step d); or

- step d2) if only this step is performed after step d) or if only both steps d1) and d2) are performed after step d) (step d2) being possibly concomitant with step d1)); or

- step d3) if it is the only step performed after step d) or after step d1) or after step d2) (step d2) being possibly concomitant with step d1)); or

- step d4) in the other cases (Fig. 1).

The drying step d6) is performed so as to remove any excess water. In particular, the resulting water content is less than or equal to about 10%, preferably from about 1 to about 8%, by weight of the thus obtained dry digest product. For example, a dry digest product is obtained by combining the digest product resulting from step d) or d1) or d2) or d3 or d4), with carriers as defined above in appropriate proportions, and by blending the components. The mixture is then dried by evaporation, and a dry digest product is obtained.

In particular, when the method according to the invention comprises at least steps a), b), c), c1), d) and e), and optionally at least one step selected from a1), d1), d2), d3), and d4), but no steps d5) and d6), the thus obtained meat tissue digest having enhanced palatability is liquid (Fig. 1). Obviously, to obtain a liquid meat tissue digest having enhanced palatability, the method can comprise any step except the freezing step d5) and the drying step d6). Preferably, to obtain a liquid meat tissue digest having enhanced palatability, the method does not comprise steps d4), d5) and d6). Yet preferably, to obtain a liquid meat tissue digest having enhanced palatability, the method comprises steps a), a1), b), c), c1), d), d1), d2), d3), and e), and does not comprise steps d4), d5) and d6). Even more preferably, to obtain a liquid meat tissue digest having enhanced palatability, the method consists of steps a), a1), b), c), c1), d), d1), d2), d3), and e).

Yet in particular, when the method according to the invention comprises at least said steps a), b), c), c1), d), d5), and e), and optionally at least one step selected from a1), d1), d2), d3), and d4), but no step d6), the thus obtained meat tissue digest having enhanced palatability is frozen (Fig. 1). Obviously, to obtain a frozen meat tissue digest having enhanced palatability, the method comprises the freezing step d5) and does not comprise step d6). Preferably, to obtain a frozen meat tissue digest having enhanced palatability, the method comprises steps a), a1), b), c), c1), d), d1), d2), d3), d5), and e), and does not comprise step d6). Yet preferably, to obtain a frozen meat tissue digest having enhanced palatability, the method consists of steps a), a1), b), c), c1), d), d1), d2), d3), d5), and e).

Yet in particular, when the method according to the invention comprises at least said steps a), b), c), c1), d), d6), and e), and optionally at least one step selected from a1), d1), d2), d3), and d4), but no step d5), the thus obtained meat tissue digest having enhanced palatability is dry (Fig. 1). Obviously, to obtain a dry meat tissue digest having enhanced palatability, the method comprises the drying step d6) but no step d5). Preferably, to obtain a dry meat tissue digest having enhanced palatability, the method comprises steps a), a1), b), c), c1), d), d1), d2), d3), d4), d6), and e), and does not comprise step d5). Yet preferably, to obtain a dry meat tissue digest having enhanced palatability, the method consists of steps a), a1), b), c), c1), d), d1), d2), d3), d4), d6), and e).

The meat tissue digest having enhanced palatability according to the present invention (as obtained in said step e)) fulfills the above definition for a PE. This meat tissue digest may be directly used as it is, typically at a rate of about 0.01 to about 80%, preferably of about 0.01 to about 60%, more preferably of about 0.01 to about 40%, even more preferably of about 0.01 to about 20%, by weight of the final pet food. Alternatively, it may be combined with one or more other palatability-enhancing composition ingredients, in particular other PEs, and all ingredients or all PEs may be applied concomitantly or sequentially.

In the method of the present invention, alkaline endopeptidases are used. A more particularly appropriate endopeptidase for use herein is an alcalase-type protease. Non-limiting examples of commercially-available enzymes that can be used here are: Alcalase (Novozymes, Bagsvaerd, DK), Protex® (Danisco Genencor, Hanka, FI), Food Pro® Alkaline (Danisco Genencor), Protemax (Prozyn, Sao paulo, BR), and Proleather (Amano, Nishiki, JP).

Advantageous embodiments of the method of the invention are such that:

- said amount E is from about 0.05 to about 1.2%, preferably from about 0.08 to about 1.2%, relative to the weight of the digest product obtained after step d); and/or

- said period of time T is from about 0.3 to about 5 hours, preferably from about 0.5 to about 5 hours; and/or

- said DH is from above 20 to below 45%, preferably from above 20 to below 40%.

In the present method, the DH value is determined using an OPA (o-phthaldialdehyde)-based method such as that described in the Examples below.

The present disclosure relates to a meat tissue digest having enhanced palatability that is obtainable by a method as described herein. In particular, this meat tissue digest is dry or liquid or frozen.

Yet another aspect of the present disclosure concerns a palatability-enhancing composition for pet food comprising at least one meat tissue digest having enhanced palatability as disclosed above, and one or more other palatability-enhancing composition ingredients as defined above, such as, in particular, Maillard-reaction resulting products as described above and/or inorganic phosphate compounds and/or microbial proteins and/or animal proteins and/or vegetable proteins and/or carbohydrates.

The content of Maillard-reaction resulting products in said palatability-enhancing composition is preferably of about 0.01 to 99%, yet preferably about 0.05 to 95%, more preferably about 0.1 to 90%, yet more preferably about 0.2 to 85%, and even more preferably about 0.5 to 80%, by weight of the composition.

In the palatability-enhancing composition provided herein, said inorganic phosphate compound is preferably present in an amount of about 0.01 to 75%, yet preferably about 0.05 to 70%, more preferably about 0.1 to 65%, yet more preferably about 0.25 to 60%, by weight of the composition.

Said inorganic phosphate compound is preferably selected from the group consisting of phosphoric acid, pyrophosphates, monophosphates, polyphosphates, and combinations thereof.

A preferred inorganic phosphate compound according to the present invention is a pyrophosphate compound selected from disodium pyrophosphate, trisodium pyrophosphate, tetrasodium pyrophosphate, dipotassium pyrophosphate, tripotassium pyrophosphate, tetrapotassium pyrophosphate, tetraferric pyrophosphate, and combinations thereof. A more particularly preferred pyrophosphate compound is trisodium pyrophosphate.

A preferred polyphosphate compound for use in the present invention is sodium tripolyphosphate.

The palatability-enhancing composition according to the invention can be dry or liquid or frozen.

Yet another aspect of the present description is a method for enhancing the palatability of a pet food or, in other words, for producing a pet food having enhanced palatability, wherein said method comprises:

a) adding to a pet food preparation or mixture, a meat tissue digest having enhanced palatability and/or a palatability-enhancing composition as defined above; and

b) obtaining a pet food having enhanced palatability.

Dry pet foods such as kibbles can commonly be prepared by different methods. One of these methods, that is widely used, is a cooker-extruder method. In the cooker-extruder method, ingredients are first blended together to form an admixture. This admixture is transferred into a steam conditioner where it is sufficiently moistened to become extrudable. The admixture then enters a cooker-extruder where it is cooked at an elevated temperature and pressure and then forced out of the apparatus through a die. This die forms the extruder product into a specific shape. Individual pieces of food are created by periodically slicing off the end of the extruded stream of product. The individual pieces are then dried in a hot air dryer. Generally, the product is dried until it contains less than 15% moisture, and preferably about 4 to 10% moisture. The dried particles or pieces are then transferred by bulk conveyor to a coating drum and sprayed with fat. Other liquids, such as, for example, phosphoric acid may alternatively be applied to the pieces, or applied in addition to the fat. The resulting pellets or kibbles constitute the basal pet food preparation, the palatability of which will be enhanced using the meat tissue digests having enhanced palatability and/or the palatability-enhancing compositions of the present invention.

Moist pet foods that are gravy-based or jelly-based can be prepared by grinding meat, meat mimetics, meat by-products, carbohydrates and/or grains, texturing agents, and forming the ground mixture via low pressure extrusion, then cooking through a steaming tunnel. At the tunnel outlet, the mixture is cut into pieces. The gravy- or jelly-type matrix is added to the resulting pieces, then sealed in cans or pouches and retorted, so as to obtain chunks-in gravy or chunks-in jelly food products.

Moist pet foods that are not gravy-based or jelly-based can be prepared by grinding meat, meat mimetics, meat by-products, carbohydrates and/or grains, and mixing with water and texturing agents. Then, the overall mixture is sealed in cans and retorted, so as to obtain loaves.

The addition step a) mentioned above can thus be performed, depending on the pet foods, meat tissue digests having enhanced palatability and/or palatability-enhancing compositions, either by incorporating or including said meat tissue digests having enhanced palatability and/or said palatability-enhancing composition into the pet food preparations or mixtures, or by coating said pet food preparations or mixtures with said meat tissue digests having enhanced palatability and/or said palatability-enhancing compositions.

For example, one can cite a method for coating dry pet foods such as kibbles. Kibbles of uncoated, extruded basal pet food can be placed in a container such a tub or a coating drum for mixing. A fat, such as pork fat or poultry fat, is heated and then sprayed onto the pet food in a manner to obtain a coating of the kibbles. The coating need not be a continuous layer, but preferably is uniform. After the fat, a palatability-enhancing composition may be applied as either a liquid or a dry powder, while the product is mixing. A liquid meat tissue digest having enhanced palatability and/or a liquid palatability-enhancing composition is typically sprayed on while a dry meat tissue digest having enhanced palatability and/or a dry palatability-enhancing composition is typically dusted on. Alternatively, meat tissue digests having enhanced palatability and/or palatability-enhancing compositions can be mixed with the fat and applied concurrently. Yet alternatively, meat tissue digests having enhanced palatability and/or palatability-enhancing compositions are coated before deposition of fat.

Alternatively, the meat tissue digest having enhanced palatability and/or the palatability-enhancing composition can be incorporated or included into the pet food preparation according to the following method. The meat tissue digest having enhanced palatability and/or the palatability-enhancing composition is contacted with the raw ingredients of the pet food preparation prior to cooking. In this case, the meat tissue digest having enhanced palatability and/or the palatability-enhancing composition is combined to proteins, fibre, carbohydrates and/or starch, etc., of the basal food preparation and is cooked with those materials in the cooker-extruder.

Inclusion into moist pet foods can be achieved as follows. The liquid or dry or frozen meat tissue digest having enhanced palatability and/or the liquid or dry or frozen palatability-enhancing composition can be applied in a gravy- or jelly-type matrix during the blending process in addition to the other pet food ingredients. The liquid or dry or frozen meat tissue digest having enhanced palatability and/or the liquid or dry or frozen palatability-enhancing composition can also be applied into a meat-by mixtures for chunks or loaf preparation. In this case, it can be added to raw materials before or after the grinding process. The meat-by mixture may be cooked in a steam or grilling oven in the case of chunks manufacturing, or directly sealed in cans in the case of loaf manufacturing.

The PEs of the present invention are useful in pet foods such as nutritionally-balanced mixtures containing appropriate pet food ingredients including proteins, fibre, carbohydrates and/or starch, etc. Such mixtures are well known to those skilled in the art, and their composition depends on many factors such as, for example, the desired food balance for the specific type of pet. Additional pet food ingredients may include vitamins, minerals, seasonings, preservatives, and surfactants. The food balance, including the relative proportions of vitamins, minerals, lipids, proteins and carbohydrates; is determined according to the known dietary standards in the veterinary field, for example by following recommendations of the National Research council (NRC), or the guidelines of the American Association of Feed Control Officials (AAFCO).

It is also disclosed herein a pet food having enhanced palatability comprising a pet food mixture and at least one meat tissue digest having enhanced palatability and/or at least one palatability-enhancing composition as described above.

For instance, said pet food is obtainable by the foregoing method of preparation.

Said pet food can be selected from wet nutritionally-balanced pet foods, dry nutritionally-balanced pet foods, semi-moist nutritionally-balanced pet foods, supplements, treats, and toys.

Wet nutritionally-balanced pet foods can be selected from the group consisting of: chunks-in-jelly food products, chunks-in-gravy food products, loafs, and soups.

Dry nutritionally-balanced pet foods can be kibbles.

It is further described herein a method for feeding pets comprising at least:

a) providing a pet food as disclosed above; and

b) feeding said pet food to pets.

Said pets can be selected from the group consisting of cats and dogs.

Yet a further aspect of the present disclosure is a kit for enhancing the palatability of a pet food comprising, in one or more containers in a single package:

- at least one meat tissue digest having enhanced palatability and/or at least one palatability-enhancing composition as described above;

- optionally, at least one pet food ingredient;

- a means for communicating information about or instructions for using said meat tissue digest having enhanced palatability and/or said palatability-enhancing composition and, optionally, said pet food ingredient.

The above-described meat tissue digests having enhanced palatability and palatability-enhancing compositions provide significant advantages over the prior art. The effects of the present invention can be measured by a test that is commonly called "two-bowl test" or "versus test". Of course, the person skilled in the art is free to use any other appropriate test than the two bowl test hereunder described to determine preference. Such alternative tests are well known in the art.

The present invention will be further described by reference to the following examples, which are presented for the purpose of illustration only and are not intended to limit the scope of the invention.

EXAMPLES

**A- DH measurement method (described in Nielsen et al. 2001):**

In protein hydrolysates, the key parameter for monitoring the reaction is the degree of hydrolysis (DH). DH is defined as the percentage of cleaved peptide bonds:

$$DH = h/h_{tot} \times 100\%$$

where $h_{tot}$ is the total number of peptide bonds per protein equivalent, and $h$ is the number of hydrolyzed bonds. $h$ is expressed in equivalent of serine-$NH_2$, as serine shows a response close to the average of all amino acids according to the formula:

$$h = (serineNH_2 - \beta)/\alpha \cdot meq/g \text{ of protein}$$

Most of food proteins have an average value of 125g/mol of amino acid molecular weight, that gives a $h_{tot} = 8$, can be adapted to the value of 7.6 for meat and 8.6 for fish. $\alpha$ and $\beta$ values are set at 1.00 and 0.40 for meat and fish, respectively.

**A-1- Principle:**

Each hydrolysed peptide bond lead to a free amino group. Those amino groups react with OPA to form a yellow complex that will then be measured in spectrophotometry at 340 nm. The optical density is a function of the complex numbers.

The method consists then of measuring the h value, then the serine equivalent value of the hydrolysate and of comparing the coloring complex formed in the hydrolysates reported to the level of complex formed in a serine standard (with the correction of a blank).

**A-2- Apparatus:**

Erlenmeyer flasks, 4-decimal, analytical balance. Pipettes: adapted to the volume. Magnetic stirrer, vortex, Spectrophotometer at 340 nm.

**A-3- Reagents:**

The OPA reagent was prepared as follows in a 200 ml flask: 7.620 g di-Na-tetraborate decahydrate and 200 mg Na-dodecyl-sulfate (SDS) were dissolved in 150 mL deionized water. The reagents have to be completely dissolved before continuing. 160 mg OPA 97% was dissolved in 4 mL ethanol. The OPA solution was then transferred quantitatively to the above-mentioned solution by rinsing with deionized water. 176 mg dithiothreitol 99% (DTT) was added to the solution by rinsing with deionized water. The solution was made up to 200 mL with deionized water.

The serine standard was prepared by dissolving 50 mg serine in 500 mL deionized water (0.9516 meqv/L).

The sample solution was prepared by dissolving 200 mg in 100 mL deionized water.

**A-4- Measurements:**

3 ml of OPA was put in each of the 6 micro spectrotube. Then, 400 $\mu$L of water (Blank), serine standard or sample is added, and measurement done at the same + 2 minutes reacting time. For each sample, a blank, then 2 standard measurements, then 3 sample measurements were done.

Assays were realized at 20°C.

Typical absorbance readings for the standards and water blanks are 0.8 and 0.07, respectively.

**A-5- Determination of h and DH:**

$$\text{Serine-NH}_2 = (OD_{sample} - OD_{blank}/OD_{standard} - OD_{blank}) \times 0.9516 \text{ meqv/L} \times 0.1 \times 100/ X \times P$$

where serine-NH$_2$ = meqv serine NH$_2$/g protein; X = g sample; P = protein % in sample; 0.1 is the sample volume in liter (L).

h is then: h = (serine-NH$_2$ - $\beta$) / $\alpha$ meqv/g protein, where $\alpha$ and $\beta$ are given above.

Calculation of DH: DH = h / h$_{tot}$ x 100 %.

**B- Palatability assessment using the "two-bowl" test:**

**B-1- Principle of the two-bowl test:**

The test is based on the postulate whereby the more food consumed, the more palatable it is. Individual versus (Two bowls) appetence tests, based on the comparison between two foods, were carried out. Tests are performed either on panel of 36 dogs or on panel of 40 cats, depending on the test's objectives.

**B-2- Operating method of the test:**

- Identical amounts of food A and food B were weighed out and placed in identical bowls. The amount present in each ration enables the daily requirements to be met.

- Distribution of the bowls:

    Dog test: the bowls were placed in an individual feed trough accessible to dogs.

Cat test: The bowls were presented at the same time to each cat in an individual loose box and their positions were switched at each meal to avoid a choice led by handedness.

- Duration of the test:

  * Cat test for dry food: from about 15 minutes to about 20 hours (if one of the two bowls was entirely eaten before the end of the test, the two bowls were removed, and the test was stopped);

  * Cat test for wet food: from about 15 minutes to about 30 minutes (if one of the two bowls was entirely eaten before the end of the test, the two bowls were removed, and the test was stopped);

  * Dog test: from about 15 minutes to about 30 minutes (if one of the two bowls was entirely eaten before the end of the test, the two bowls were removed, and the test was stopped). Parameters studied

- Measured parameters: First food consumed ("initial appeal") and amount of each food consumed by the end of the test;

- Calculated parameters: individual consumption ratio in % (CR)

$$CR_A = \text{consumption of A (g)} \times 100/(\text{consumption of A+B) (g)}$$

$$CR_B = \text{consumption of B (g)} \times 100/(\text{consumption of A+B) (g);}$$

$\Rightarrow$ Average consumption ratio (ACR) = average of all individual ratios (an equal importance is given to each animal, regardless of its size and of its corresponding consumption).

If animals have higher or lower consumption compared to predetermined values (which are function of, e.g., the animal weight and/or metabolism), they are not taken into account into statistical treatment.

**B-3- Statistical analysis:**

Statistical analysis was used to determine if there was a significant difference between the 2 ratios. A Student's t-test with 3 error thresholds, namely 5%, 1% and 0.1%, was performed.
A Chi-square test was used to determine if there was a significant difference between the number of pets with Food A as first food eaten and the number of pets with Food B as first food eaten.
Significance levels are noted as below:

| NS | not significant | $(p > 0.05)$ |
| * | significant | $(p < 0.05)$ |
| ** | highly significant | $(p < 0.01)$ |
| *** | very highly significant | $(p < 0.001)$ |

**C- Examples of embodiments of the present invention:**

The examples disclosed herein to illustrate the present invention refer to two palatability positioning.
In Example 1, variations of the 3 following parameters: alkaline endopeptidase amounts (E), hydrolysis time (T), and DH values allowed to obtain different meat tissue digests from fish that were compared for their palatability.
In Example 2, one particular combination of an alkaline endopeptidase amount E and a hydrolysis time T of meat tissues from fish (white fish heads and bones) was chosen and compared in palatability testing to a similar meat tissue digest from fish obtained using a neutral endopeptidase.
In Example 3, one particular combination of an alkaline endopeptidase amount E and a hydrolysis time T of meat tissues from pork (pork muscle) was chosen and compared in palatability testing to a similar meat tissue digest from pork obtained using a neutral endopeptidase (control composition).

**Example 1:**

In this example, different dry fish tissue digests were prepared according to different conditions of hydrolysis. All dry fish tissue digests were prepared according to Fig 1. The formulation of liquid digest product S is described in Table 1 below:

Table 1

| Formulation of liquid digest product S | % by weight of liquid digest product S |
|---|---|
| White fish heads and bones | 95.28 |
| Caustic soda | 0.5 |
| Antioxydants | 0.130 |
| Citric acid | 0.02 |
| Ascorbic acid | 0.03 |
| Maillard Ingredients | 3.4 |
| Enzyme : Alkaline endopeptidase | 0.64 |

Liquid digest product S ("Liq dig pd S") was prepared as follows. Fresh raw materials (white fish heads and bones) were ground in a vertical cutter for 6 min at a maximum speed. The ground raw materials were transferred to a reactor and mixed with the other ingredients. pH was adjusted at 8.5 with caustic soda, and then enzyme was incorporated. The hydrolysis step was carried at 60°C for 3 hours. At the end of the hydrolysis step, Maillard ingredients were incorporated. The temperature was gradually increased to 110°C and maintained for 90min in order to inactivate the enzyme, to allow Maillard reaction and thus to develop flavour compounds. A slight cooling was set before beginning a rough filtration to obtain a liquid digest product S with a particle size lower than 500 μm.
This liquid was then spray dried at appropriate temperature from 180 to 220°C for several minutes, in order to remove excess of water. Dry fish digest S was thus obtained.
The formulation of liquid fish tissue digest products U, V, W, X, Y, and Z is similar to that of liquid digest product S, except (see Table 2 below) the amount of alkaline endopeptidase E (%) and the duration of hydrolysis (hours).
Variations of the amount of enzyme were compensated by more or less ground fish flesh and bones.

Table 2

| | Alkaline endopeptidase (%) | Hydrolysis time (h) | DH (%) |
|---|---|---|---|
| Liq Dig Pd S | 0.64 | 3 | 30.1 |
| Liq Dig Pd U | 0.08 | 3 | 24.3 |
| Liq Dig Pd V | 0.64 | 0.5 | 24.4 |
| Liq Dig Pd W | 1.2 | 3 | 36.1 |
| Liq Dig Pd X | 0.64 | 5 | 35.1 |
| Liq Dig Pd Y | **0.3** | **3** | 27.8 |
| Liq Dig Pd Z | 0.15 | 1 | 19.3 |

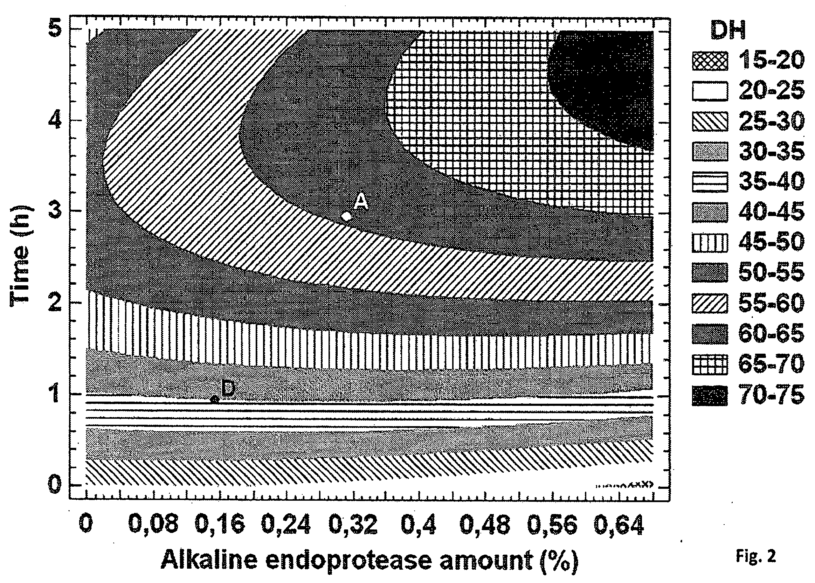

DH values were determined as in all examples herein disclosed, i.e., after the thermal treatment for inactivating the enzyme as described above (see Fig. 1). Liquid digest products S, U, V, W, X, Y, and Z are spotted in Fig. 2.
Dry fish tissue digests U, V, W, X, Y, and Z were obtained from liquid digest products U, V, W, X, Y, and Z, respectively, as described above in connection with dry fish tissue digest S.
Palatability assessment: Compositions S, U, V, W, X, Y, and Z were obtained after blending dry fish tissue digests S, U, V, W, X, Y, or Z, each with trisodium pyrophosphate in a respective proportion of 60:40, and dusted at 1.5% by weight of dry cat kibbles previously coated with 6% of poultry fat, giving complete and nutritionally-balanced palatable dry cat foods S, U, V, W, X, Y, and Z. Palatability was assessed as described above in order to compare cat food products U, V, W, X, and Y, to S. In another round of palatability assessment, dry cat food Z was compared to dry cat foods S and Y. Results of palatability for average consumption ratio (in %) for Day 1 and Day 2 are presented below in Table 3:

Table 3

| Test of petfood | DAY 1 | | | DAY 2 | | |
|---|---|---|---|---|---|---|
| | Average consumption of dry cat food S (%) | Average consumption of the dry cat food compared to S (%) | Statistical Significance | Average consumption of dry cat food S (%) | Average consumption of the dry cat food compared to S (%) | Statistical Significance |
| S vs U | 52 | 48 | NS | 46 | 54 | NS |
| S vs V | 46 | 54 | NS | 47 | 53 | NS |
| S vs W | 52 | 48 | NS | 58 | 42 | NS |
| S vs X | 40 | 60 | * | 54 | 46 | NS |
| S vs Y | 55 | 45 | NS | 50 | 50 | NS |
| S vs Z | 47 | 53 | NS | 59 | 41 | ** |
| Y vs Z | 49 | 51 | NS | 63 | 37 | *** |

Those results show that food products S, U, V, W, and Y have equivalent palatability, whereas food product Z has inferior palatability than Y and S cat foods. X cat food is considered as at least equivalent to product S, although cat showed a slight preference the first day for product X. All those results demonstrate that specific hydrolysis conditions enable to increase cat food palatability.

**Example 2:**

In this example, fish cat food product Y from Example 1 above was compared for palatability to a dry cat food coated with a fish-based dry cat PE of the commercial range SPF C'SENS®.

The formulation of liquid tissue digest product Y is described in Table 4 below:

Table 4

| Formulation of liquid digest product Y | % by weight of liquid digest product Y |
|---|---|
| **White fish heads and bones** | 95.32 |
| **Caustic soda** | 0.5 |
| **Antioxydants** | 0.130 |
| **Citric acid** | 0.02 |
| **Ascorbic acid** | 0.03 |
| **Maillard Ingredients** | 3.4 |
| **Enzyme : Alkaline endopeptidase** | 0.3 |

Liquid tissue digest product Y was prepared as described in Example 1. This liquid was then spray dried at appropriate temperature from 180 to 220°C for several minutes, in order to remove excess of water. Dry fish tissue digest Y was thus obtained.

The fish-based liquid tissue digest used to produce dry cat PE of the commercial range SPF C'SENS® was obtained from similar raw material (white fish heads and bones) but the enzyme used for hydrolyzing step is a neutral endopeptidase. This step was followed by a drying step to produce a dry digest.

DH values were determined as in all examples herein disclosed, i.e., after the thermal treatment for inactivating the enzyme as described above (see Fig. 1).

The results are presented in Table 5:

Table 5

|  | Liquid digest product Y | Liquid composition SPF C'SENS® |
|---|---|---|
| DH % | 27.8 | 19.85 |

For palatability assessment, the dry fish tissue digest Y was mixed with trisodium pyrophosphate in a respective proportion of 60:40. This mix was dusted at 1.5% by weight of dry cat kibbles previously coated with 6% of poultry fat.

The fish tissue-based dry cat PE of the commercial range SPF C'SENS® was also dusted at 1.5% on dry cat kibbles. The two cat foods were presented to cats for palatability assessment.

Table 6

|  | DAY 1 | | | DAY 2 | | |
|---|---|---|---|---|---|---|
|  | Average consumption of dry cat food Y (%) | Average consumption of dry cat food coated with SPF C'SENS® (%) | Statistical Significance | Average consumption of dry cat food Y (%) | Average consumption of dry cat food coated with SPF C'SENS® (%) | Statistical Significance |
| Y vs PE from the range | 60 | 40 | *** | 57 | 43 | ** |

As shown in Table 6, consumption of food was significantly different between cat food Y and cat food coated with SPF C'SENS®, demonstrating the higher palatability for cats of a meat tissue digest obtained by using an alkaline endopeptidase compared to one obtained by using a neutral endopeptidase.

**Example 3:**

Two dry animal digests for cats were manufactured as follows:

*Control composition 1:*

Formulation is expressed by weight of the liquid digest product.

Table 7

| Formulation of liquid digest product 1 | % by weight of liquid digest product 1 |
|---|---|
| **Pork muscle** | 71 |
| **Water** | 23.87 |
| **Caustic soda** | 1.472 |
| **Antioxydants** | 0.142 |
| **Citric acid** | 0.019 |
| **Ascorbic acid** | 0.028 |
| **Maillard Ingredients** | 3.22 |
| **Enzyme: Neutral endopeptidase** | 0.249 |

Fresh raw materials (pork muscle) were ground in a vertical cutter for 10 min with water at a maximum speed. The ground raw materials were transferred to a reactor and mixed with the other ingredients. pH was adjusted to 6.5 with caustic soda, and then enzyme was incorporated. The hydrolysis step was carried at 55°C for 3 hours. At the end of the hydrolysis step, Maillard ingredients were incorporated. The temperature was gradually increased to 100°C and maintained during 30min in order to inactivate the enzyme, to allow Maillard reaction, and thus to develop flavour compounds. A slight cooling was set before beginning a rough filtration to obtain a liquid digest product 1 with a particle size lower than 500 µm.

This liquid was then spray dried at appropriate temperature from 180 to 220°C for several minutes, in order to remove excess of water. Dry animal digest 1 was obtained. A cat food powder control composition 1 was then obtained by blending 60% of dry animal digest 1 with 40% of trisodium pyrophosphate.

*Composition 2:*

The formulation of liquid digest 2 is the same as the formulation of liquid digest 1, except the enzyme used that was an alkaline endopeptidase. Manufacturing conditions were the same, excepting that pH and temperature were adjusted according to the enzyme supplier's recommendations to 8.5 and 60°C, respectively. A cat food powder composition 2 was thus obtained.

**Table 8**

| Formulation of liquid digest product 2 | % by weight of liquid digest product 2 |
|---|---|
| Pork muscle | 70 |
| Water | 23.55 |
| Caustic soda | 2.792 |
| Antioxydants | 0.142 |
| Citric acid | 0.019 |
| Ascorbic acid | 0.028 |
| Maillard Ingredients | 3.22 |
| Enzyme: Alkaline endopeptidase | 0.249 |

DH values were determined as in all examples herein disclosed, i.e., after the thermal treatment for inactivating the enzyme as described above (see Fig. 1).

Table 9

| | Liquid digest product 1 | Liquid digest product 2 |
|---|---|---|
| DH % | 10.7 | 29.8 |

Cat food powder control composition 1 or cat food powder composition 2 was dusted at 1.5% by weight of dry cat kibbles previously coated with 6% of poultry fat. The two pet foods, control dry cat food 1 and dry cat food 2, were presented to cats for palatability assessment as described above.

Table 10

| | DAY 1 | | | DAY 2 | | |
|---|---|---|---|---|---|---|
| | Average consumption of control dry cat food 1 (%) | Average consumption of dry cat food 2 (%) | Statistical significance | Average consumption of control dry cat food 1 (%) | Average consumption of dry cat food 2 (%) | Statistical Significance |
| Control composition 1 vs composition 2 | 46 | 54 | NS | 40 | 60 | * |

As shown in Table 10, consumption of food was significantly different between control dry cat food 1 and dry cat food 2 in favor of dry cat food 2, demonstrating the higher palatability for cats of a digest obtained by using an alkaline endopeptidase compared to one obtained using a neutral endopeptidase.

REFERENCES

A.O.A.C. 1995. Official methods of analysis. 16th ed., Ch. 12 Horowitz, Washington, DC, pp 7-9

Hung et al. 1984. J. Food Sci. 49:1535-1542

Silvestre. 1997. Food Chem. 60:263-273

Nielsen et al. 2001. J. Food Sci. 66:642-646

## Claims

1. A method for preparing a meat tissue digest having enhanced palatability to cats, comprising:

   a) providing a meat tissue from animal, wherein said meat tissue can include fish flesh, fish skin, fish bones, fish heads, fish edges, any parts thereof, as well as mixtures thereof;
   b) contacting said meat tissue with at least one alkaline endopeptidase;
   c) allowing said alkaline endopeptidase to hydrolyze said meat tissue;
   c1) adding one or more Maillard ingredients to the digest product of said step c);
   d) thermally treating the thus obtained digest product to inactivate said alkaline endopeptidase; and
   e) obtaining said meat tissue digest having enhanced palatability,

   wherein:

   - said alkaline endopeptidase is used in an amount (E) from about 0.01 to about 1.2 % relative to the weight of the digest product obtained after step d);
   - said hydrolysis in step c) is performed during a period of time (T) from about 0.25 to about 5.0 hours; and
   - the digest product obtained after step d) has a degree of hydrolysis (DH) above 20 %, said DH being defined by equation (1):

$$DH = 14.04 + 1.8xE + 5.5xT - 0.48xT^2 + 4.97xE^2 + 0.829xExT,$$

   wherein said DH is determined using an o-phthaldialdehyde (OPA) - based method.

2. The method according to claim 1, further comprising a step a1) after said step a), of adjusting the pH of said meat tissue.

3. The method according to claim 1 or 2, wherein said step d) is adapted to facilitate one or more thermal reactions in the digest product resulting from said step c1).

4. The method according to anyone of claims 1 to 3, further comprising a step d1) of filtrating the digest product resulting from step d).

5. The method according to anyone of claims 1 to 4, further comprising a step d2) of cooling down the digest product resulting from the latter step of said steps d) and d1).

6. The method according to claim 5, wherein said step d2) is concomitant with said step d1), said steps d1) and d2) being performed on the digest product resulting from step d).

7. The method according to anyone of claims 1 to 6, wherein said amount E is relative to the weight of the digest product obtained from said step d) or d1) or d2), and wherein said DH is of said digest product obtained from said step d) or d1) or d2).

8. The method according to anyone of claims 1 to 7, further comprising a step d3) of adding one or more pet food ingredients to the digest product resulting from the latter step of said steps d), d1), and d2).

9. The method according to anyone of claims 1 to 8, further comprising a step d4) of concentrating the digest product resulting from the latter step of said steps d), d1), d2), and d3),

10. The method according to anyone of claims 1 to 9, further comprising a step d5) of freezing the digest product resulting from the latter step of said steps d), d1), d2), d3), and d4).

11. The method according to anyone of claims 1 to 9, further comprising a step d6) of drying the digest product resulting from the latter step of said steps d), d1), d2), d3), and d4).


**Patentansprüche**

1. Verfahren zum Herstellen eines Fleischgewebeextrakts mit verbesserter Schmackhaftigkeit für Katzen, das Folgendes umfasst:

    a) Bereitstellen eines Fleischgewebes von einem Tier, wobei das Fleischgewebe Fischfleisch, Fischhaut, Fischgräten, Fischköpfe, Fischränder, irgendwelche Teile davon sowie Mischungen davon umfassen kann;
    b) Inkontaktbringen des Fleischgewebes mit mindestens einer alkalischen Endopeptidase;
    c) Zulassen, dass die alkalische Endopeptidase das Fleischgewebe hydrolysiert;
    c1) Beimengen von einer oder mehreren Maillard-Zutaten zum Extraktprodukt von Schritt c);
    d) Wärmebehandeln des so erhaltenen Extraktprodukts zum Deaktivieren der alkalischen Endopeptidase; und
    e) Erhalten des Fleischgewebeextrakts mit verbesserter Schmackhaftigkeit,

    wobei:

    - die alkalische Endopeptidase in einer Menge (E) von etwa 0.01 bis etwa 1.2 Gew.-% des nach dem Schritt d) erhaltenen Extraktprodukts verwendet wird;
    - die Hydrolyse im Schritt c) während eines Zeitraums (T) von etwa 0.25 bis etwa 5.0 Stunden durchgeführt wird; und
    - das nach dem Schritt d) erhaltene Extraktprodukt einen Hydrolysegrad (DH) über 20 % aufweist, wobei der DH durch die folgende Gleichung (1) definiert ist:

$$DH=14.04+1.8 \mathrm{x} E+5.5 \mathrm{x} T-0.48 \mathrm{x} T^{2}+4.97 \mathrm{x} E^{2}+0.829 \mathrm{x} E \mathrm{x} T$$

    wobei der DH unter Verwendung eines Verfahrens auf o-Phthaldialdehydbasis (OPA) bestimmt wird.

2. Verfahren nach Anspruch 1, das ferner nach dem Schritt a) einen Schritt a1) des Einstellens des pH-Werts des Fleischgewebes umfasst.

3. Verfahren nach Anspruch 1 oder 2, wobei der Schritt d) angepasst ist, um eine oder mehrere thermische Reaktionen in dem Extraktprodukt zu erleichtern, das aus dem Schritt c1) resultiert.

4. Verfahren nach einem der Ansprüche 1 bis 3, das ferner einen Schritt d1) des Filterns des Extraktprodukts umfasst, das aus dem Schritt d) resultiert.

5. Verfahren nach einem der Ansprüche 1 bis 4, das ferner einen Schritt d2) des Herunterkühlens des Extraktprodukts umfasst, das aus dem letzteren Schritt von den Schritten d) und d1) resultiert.

6. Verfahren nach Anspruch 5, wobei der Schritt d2) gleichzeitig mit dem Schritt d1) erfolgt, wobei die Schritte d1) und d2) auf dem Extraktprodukt durchgeführt werden, das aus dem Schritt d) resultiert.

7. Verfahren nach einem der Ansprüche 1 bis 6, wobei die Menge E sich auf das Gewicht des Extraktprodukts bezieht, das von dem Schritt d) oder d1) oder d2) erhalten wird, und wobei der DH von dem Extraktprodukt ist, das von dem Schritt d) oder d1) oder d2) erhalten wird.

**8.** Verfahren nach einem der Ansprüche 1 bis 7, das ferner einen Schritt d3) des Beimengens von einer oder mehreren Tiernahrungszutaten zu dem Extraktprodukt umfasst, das aus dem letzteren Schritt von den Schritten d), d1) und d2) resultiert.

**9.** Verfahren nach einem der Ansprüche 1 bis 8, das ferner einen Schritt d4) des Konzentrierens des Extraktprodukts umfasst, das aus dem letzteren Schritt von den Schritten d), d1), d2) und d3) resultiert.

**10.** Verfahren nach einem der Ansprüche 1 bis 9, das ferner einen Schritt d5) des Einfrierens des Extraktprodukts umfasst, das aus dem letzteren Schritt von den Schritten d), d1), d2), d3) und d4) resultiert.

**11.** Verfahren nach einem der Ansprüche 1 bis 9, das ferner einen Schritt d6) des Trocknens des Extraktprodukts umfasst, das aus dem letzteren Schritt von den Schritten d), d1), d2), d3) und d4) resultiert.


## Revendications

**1.** Procédé de préparation d'un hydrolysat de tissu carné présentant une meilleure appétence pour les chats, comprenant les étapes de :

a) fourniture d'un tissu carné provenant d'un animal, ledit tissu carné pouvant comprendre de la chair de poisson, de la peau de poisson, des cartilages de poisson, des têtes de poisson, des arêtes de poisson, toute partie de celles-ci, ainsi que des mélanges de celles-ci ;
b) mise en contact dudit tissu carné avec au moins une endopeptidase alcaline ;
c) hydrolyse dudit tissu carné par ladite endopeptidase alcaline ;
c1) addition d'un ou de plusieurs ingrédients de Maillard au produit hydrolyse de ladite étape c) ;
d) traitement thermique du produit hydrolysé ainsi obtenu pour inactiver ladite endopeptidase alcaline ; et
e) obtention dudit hydrolysat de tissu carné présentant une meilleure appétence,

dans lequel :

- ladite endopeptidase alcaline est utilisée en une quantité (E) allant d'environ 0,01 à environ 1,2 % par rapport au poids du produit hydrolysé obtenu après l'étape d) ;
- ladite hydrolyse de l'étape c) est réalisée au cours d'un temps (T) allant d'environ 0,25 à environ 5,0 heures ; et
- le produit hydrolyse obtenu après l'étape d) a un degré d'hydrolyse (DH) supérieur à 20 %, ledit DH étant défini par l'équation (1) :

$$DH=14,04+1,8xE+5,5xT-0,48xT^2+4,97xE^2+0,829xExT$$

dans laquelle ledit DH est déterminé en utilisant un procédé basé sur l'o-phtaldialdéhyde (OPA).

**2.** Procédé selon la revendication 1, comprenant en outre une étape a1), après ladite étape a), d'ajustement du pH dudit tissu carné.

**3.** Procédé selon la revendication 1 ou 2, dans lequel ladite étape d) est adaptée pour faciliter une ou plusieurs réactions thermiques dans le produit hydrolyse résultant de ladite étape c1).

**4.** Procédé selon l'une quelconque des revendications 1 à 3, comprenant en outre une étape d1) de filtration du produit hydrolysé résultant de l'étape d).

**5.** Procédé selon l'une quelconque des revendications 1 à 4, comprenant en outre une étape d2) de refroidissement du produit hydrolysé résultant de la dernière étape desdites étapes d) et d1).

**6.** Procédé selon la revendication 5, dans lequel ladite étape d2) est concomitante à ladite étape d1), lesdites étapes d1) et d2) étant réalisées sur le produit hydrolysé résultant de l'étape d).

**7.** Procédé selon l'une quelconque des revendications 1 à 6, dans lequel ladite quantité E est relative au poids du produit hydrolyse obtenu à partir de l'étape d) ou d1) ou d2) et dans lequel ledit DH est celui dudit produit hydrolysé obtenu à partir de ladite étape d) ou d1) ou d2).

**8.** Procédé selon l'une quelconque des revendications 1 à 7, comprenant en outre une étape d3) d'addition d'un ou de plusieurs ingrédients alimentaires pour animaux domestiques au produit hydrolysé résultant de la dernière étape desdites étapes d), d1) et d2).

**9.** Procédé selon l'une quelconque des revendications 1 à 8, comprenant en outre une étape d4) de concentration du produit hydrolysé résultant de la dernière étape desdites étapes d), d1), d2) et d3).

**10.** Procédé selon l'une quelconque des revendications 1 à 9, comprenant en outre une étape d5) de congélation du produit hydrolysé résultant de la dernière étape desdites étapes d), d1), d2), d3) et d4).

**11.** Procédé selon l'une quelconque des revendications 1 à 9, comprenant en outre une étape d6) de séchage du produit hydrolysé résultant de la dernière étape desdites étapes d), d1), d2), d3) et d4).

Fig. 1

Fig. 2

EP 2 763 548 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011043828 A
- WO 2009095417 A

**Non-patent literature cited in the description**

- Official methods of analysis. A.O.A.C. 1995, 7-9
- **HUNG et al.** *J. Food Sci.,* 1984, vol. 49, 1535-1542
- **SILVESTRE.** *Food Chem.,* 1997, vol. 60, 263-273
- **NIELSEN et al.** *J. Food Sci.,* 2001, vol. 66, 642-646